# EUROPÄISCHE PATENTSCHRIFT

(11) **EP 1 615 023 B1**
(45) Veröffentlichungstag und Bekanntmachung des Hinweises auf die Patenterteilung: **20.08.2008**
(21) Anmeldenummer: 04016086.3
(22) Anmeldetag: 08.07.2004
(51) Int. Cl.: G01N 27/36

(54) **Aufbewahrungs-Lösung für pH-Glaselektrode**
Storage solution for glass pH electrode
Solution de stockage pour électrode de verre pour pH

(43) Veröffentlichungstag der Anmeldung: 11.01.2006
(73) Patentinhaber: Metroglas AG, 8910 Affoltern a.A. (CH)
(72) Erfinder: O'Neill, Shane, 8902 Urdorf (CH)
(74) Vertreter: Müller, Christoph Emanuel

(56) Entgegenhaltungen:
- US-A- 3 445 363
- US-A1- 2003 150 726
- ANONYMOUS: "Direktpotentiometrische Natriumbestimmung - jetzt noch einfacher und selektiver" METROHM INFORMATION, [Online] Bd. 30, Nr. 2, 2001, Seiten 11-12, XP002308158 ISSN: 1424 0890 Gefunden im Internet: URL:http://www.metrohm.com/company/metrohm info/2001/pdf_d/mi2001_2d_06.pdf> [gefunden am 2004-11-29]
- Gefunden im Internet: URL:http://de.wikipedia.org/wiki/System> [gefunden am 2006-04-21]
- WAHRIG: "Deutsches Wörterbuch" 2005, WISSEN MEDIA VERLAG GMBH , GÜTERSLOH/MÜNCHEN * Seite 1230 *

## Beschreibung

Die Erfindung betrifft ein Verfahren zur Aufbewahrung einer pH-Glaselektrode, die Verwendung einer Ammoniumnitrat-oder Ammoniumchlorid- Lösung als Aufbewahrungslösung für eine solche pH-Glaselektrode, sowie ein System umfassend eine pH-Glaselektrode und eine Aufbewahrungslösung gemäss der Oberbegriffe der unabhängigen Patentansprüche.

Zur Messung von pH-Werten wässriger Medien werden häufig pH-Glaselektroden verwendet. Derartige pH-Glaselektroden verfügen über eine meist halbkugelförmige Membrane aus pH-Glas mit einem Silikat-Grundgerüst, welches bei Kontakt mit wässrigen Medien eine dünne Quellschicht ausbildet. Vorwiegend werden Lithiumsilikat-Gläser verwendet. Die Wandung der pH-Glasmembran ist in der Regel ca. 0.2 mm bis 0.5 mm stark, wohingegen die Quellschicht im Kontaktbereich zum wässrigen Medium in der Regel lediglich ca. 0.1 µm stark ist.

Auf der Innenseite der pH-Glasmembran befindet sich eine Pufferlösung mit bekanntem pH-Wert; die Aussenseite der pH-Glasmembran wird mit der zu vermessenden Probelösung in Kontakt gebracht. An der inneren und der äusseren Grenzfläche zwischen der pH-Glasmembran und den Lösungen bilden sich nun Potentialdifferenzen aus, die vom jeweiligen pH-Wert der Lösungen abhängen und mit einer inneren Bezugselektrode und einer äusseren Bezugselektrode gemessen werden. Diese Spannung ist proportional zum pH der Analyselösung.

In der genannten Quellschicht ist die Glasstruktur aufgeweicht; die Quellschicht ist somit für eindringende Ionen, insbesondere für Kationen zugänglich. pH-Gläser sind in ihrer Beschaffenheit darauf optimiert, dass möglichst nur Protonen in die Quellschicht eindringen können. Der Quellvorgang ist zwar langsam, jedoch stetig fortschreitend, so dass auch andere Ionen, wie bspw. Natrium- und Kalium-Ionen in die Quellschicht eindringen können. Bei höheren Alkalikonzentrationen führt dies zum sog. "Alkalifehler", insbesondere bei niedrigen Protonenkonzentrationen der zu vermessenden Probe. Wird eine pH-Glaselektrode über längere Zeit in höher konzentrierten Alkalisalzlösungen gelagert, so dringen bspw. Natrium- oder Kaliumionen in die Quellschicht ein. Diese müssen bei einer pH-Messung dann erst wieder aus der Quellschicht verdrängt werden, was zu einer verlängerten Ansprechzeit der pH-Glaselektrode führt. Zwar ist die Einlagerung von Fremdionen reversibel, jedoch können sich insbesondere Natrium- und Kaliumionen sehr stabil in Silikatgerüste einlagern.

Als innere und äussere Bezugselektroden werden zumeist Silber/Silberchlorid-Elektroden (Ag/AgCl-Elektroden) oder Quecksilber-Kalomel-Elektroden (Hg₂Cl₂-Elektroden) verwendet. Hierbei steht das Metall mit seinem schwerlöslichen Chlorid (als Überzug auf dem Metall) in Verbindung, welches wiederum in der Regel in eine gesättigte Kaliumchloridlösung (KCl-Lösung) eintaucht. Diese Kaliumchloridlösung steht über ein Diaphragma mit der Testlösung (im Falle der äusseren Bezugselektrode) oder mit der Pufferlösung mit bekanntem pH-Wert (im Falle der inneren Bezugselektrode) in Verbindung.

Die Quellschicht muss ständig feucht gehalten werden, damit sie intakt bleibt. Daher wird die pH-Glaselektrode insbesondere bei längerem Nichtgebrauch in einer Aufbewahrungs-Lösung gelagert. In der Regel wird hierfür ebenfalls eine Kaliumchloridlösung (KCl-Lösung) aufgrund der nur sehr kleinen Diffusionspotentiale am Diaphragma und der Preisgünstigkeit von KC1 verwendet. Zudem kann ein Eindringen der Kaliumchloridlösung in das Referenzsysder pH-Glaselektrode über die äussere Bezugselektrode nicht zu einer Potentialverschiebung führen, da zumeist auch KaliumChlorid-Lösung als Elektrolyt im Referenzsystem verwendet wird.

Das Dokument US ,445,363 beschreibt die Lagerung einer pH- Glaselekdrode in einer koszendrierten Mgch-Lösung während eines Mocats und se eiser Temperatur vol 140°C.

In dem Dokument US 2003/ 0150726 A1 ist die Lagerung eises pH- Glaselektrode in de-iomisiertein Wasser Seschrieben.

In ,,Metrohm Information", Heft 2/2001 (Seiten 11-12) ist die Aufbeuchrung einer pH- Glaselektrode in einer Nace- Lösung der Koszestration 0,1 mol/L sechriesen.

Nachteilig an den bekannten Aufbewahrungslösungen, insbesondere der Kaliumchlorid-Lösung, sind die insbesondere nach längerer Lagerung verlängerten Ansprechzeiten der pH-Glaselektrode.

Es ist daher eine Aufgabe der Erfindung, die Nachteile des bekannten zu vermeiden, insbesondere eine Aufbewahrungslösung für eine pH-Glaselektrode sowie ein System umfassend eine pH-Glaselektrode und eine Aufbewahrungslösung bereitzustellen, welche die Ansprechzeiten der pH-Glaselektrode insbesondere auch nach längerer Lagerung nicht wesentlich verschlechtert, insbesondere möglichst konstant hält. Zudem soll hierbei eine Potentialverschiebung gegenüber dem Elektrolyten insbesondere in der äusseren Bezugselektrode möglichst vermieden werden und die Korrosion des Glases bzw. das Fortschreiten des Aufquellens der Quellschicht möglichst gering gehalten werden. Die Steilheit einer Kalibrationsgeraden soll zudem nicht beeinflusst werden.

Diese Aufgabe wird erfindungsgemäss gelöst durch ein Verfahren zur Aufbewahrung einer pH-Glaselektrode, die Verwendung einer Ammoniumnitrat-oder Ammoniumchlorid- Lösung als Aufbewahrungslösung für eine solche pH-Glaselektrode, sowie ein System umfassend eine pH-Glaselektrode und eine Aufbewahrungslösung gemäss der kennzeichnenden Teile der unabhängigen Patentansprüche.

Die Ammoniumnitrat oder Ammoniumchlorid Lösung enthält Alkalimetallionen in einer Konzentration kleiner als 0.5 mol/L .Vorzugsweise ist eine derartige Lösung alkalimetallionen-frei; insbesondere kurzzeitige, höhere Konzentratio-nen an Alkalimetallionen von bspw. bis zu 0.5 mol/L sind jedoch tolerierbar.

Das Verfahren zur Aufbewahrung einer pH-Glaselektrode ist dadurch gekennzeichnet, dass wenigstens die Quellschicht der pH-Glaselektrode in einer Aufbewahrungs-Lösung gelagert wird, die Alkali-metallionen in einer Konzentration weiser als 0.5 mol/L enthält. In Abkehr von der im Stand der Technik bevorzugten Kaliumchlorid-Lösung (KCl-Lösung) wurde überraschend gefunden, dass durch eine Ammoniumsalz-Lösung wie bspw. eine Ammoniumchlorid-Lösung (NH₄Cl-Lösung) oder eine Ammoniumnitrat-Lösung (NH₄NO₃-Lösung); als Aufbewahrungslösung die Ansprechzeit im wesentlichen auch nach längerer Lagerung beibehalten werden können. Dies ist überraschend, da das Ammoniumion und das Kaliumion ansonsten sehr ähnlich sind (Ionengrösse, etc.), sich jedoch offensichtlich hinsichtlich der Integrain das Silikatgerüst einer Quellschicht unterschiedlich verhalten. Zudem weist insbesondere eine 3M Ammoniumchloridden zusätzlichen Vorteil auf, dass die Lösung einen pH von 4.4 besitzt. Dies liegt innerhalb des besonders bevorzugten pH-Bereichs von pH 3 und pH 5, in dem die Korrosion des Glases am geringsten und das Fortschreiten des Quellvorganges am langsamsten ist (Z. Boksay, G. Bouquet, "The pH-dependence and an electrochemical interpretation of the dissolution rate of a silicate glass", Phys. Chem. Glasses 21 (1980)).

Gemäss einer bevorzugten Ausführungsform wird wenigstens die Quellschicht einer kombinierten pH-Glaselektrode in einer die Alkalimetallionen in einer konzentration kleiner als 0.5 mol/L enthält,

Es wurde gefunden, dass mit einer Erdalkalisalz-Lösung, insbesondere einer Erdalkalichlorid-Lösung, vorzugsweise einer Magnesiumchlorid-Lösung zwar eine Konditionierung der Quellschicht bewirkt werden kann, die die Wirkung einer Ammoniumsalz-Lösung, insbesondere einer Ammoniumchlorid-Lösung teilweise sogar übertrifft. Jedoch kann sich beim Eindringen der Magnesiumchlorid-Lösung in das Referenzsystem, insbesondere über die äussere Bezugselektrode mit einem Kaliumchlorid-Elektrolyten, eine unerwünschte Potentialverschiebung und eine Veränderung der Steigung der Kalibrationsgeraden ergeben; derartige Probleme treten bei Verwendung einer Ammoniumsalz-Lösung, insbesondere einer Ammoniumchlorid-Lösung nicht auf.

Hier und im folgenden wird unter einer "getrennten" pH-Glaselektrode eine solche pH-Glaselektrode verstanden, bei welcher die äussere Bezugselektrode von der eigentlichen Glaselektrode physisch getrennt oder zwecks Lagerung trennbar angeordnet ist. Unter einer "kombinierten" pH-Glaselektrode wird hingegen eine solche pH-Glaselektrode verstanden, bei welcher die äussere Bezugselektrode physisch mit der eigentlichen Glaselektrode verbunden und nicht ohne weiteres zur Lagerung von dieser trennbar ausgebildet ist.

Mit einer Ammoniumsalz-Lösung, insbesondere einer Ammoniumchlorid-Lösung als Aufbewahrungslösung wurde ein hervorragender Kompromiss gefunden, mit welchem die Ansprechzeit auch nach langer Lagerung in der Aufbewahrungslösung erhalten bleibt, mit welchem zudem keine Potentialverschiebung gegenüber dem gängigen Bezugselektrolyten, 3M Kaliumchlorid, auftritt beim Eindringen von Aufbewahrungslösung in das Referenzsystem über äussere Bezugselektrode.

Die Anionen, insbesondere die Chloridionen- bzw. Nitrationen-Konzentration der Aufbewahrungs-Lösung ist vorzugsweise so zu wählen, dass sie der Chloridionen-Konzentration des Referenzelektrolyten ± etwa 50% entspricht. Die bevorzugte Konzentration der Ammoniumsalz-Lösung, insbesondere einer Ammoniumchlorid- bzw. Ammoniumnitrat-Lösung, c (NH₄Cl) bzw. c(NH₄NO₃), liegt typischerweise zwischen 0.1 mol/l und gesättigt, vorzugsweise bei etwa 3 mol/l.

Die Erfindung betrifft ferner die Verwendung einer Ammoniumchlorid-Lösung (NH₄Cl-Lözung) oder Ammoniumnitrat-Lösung (NH₄NO₅-Lösung) als Aufbewahrungs-Losung für eine pH-Glaselektrode, wobei die Aufbewahrungs-Lösung Alkalimetallionen in einer Kontesdiation kleises als 0.5 mol/h enthält.

Hierbei ist es besonders bevorzugt, eine solche Ammoniumchlorid-oder Ammoniumnitrat-Lösung, insbesondere mit einer Konzentration von typischerweise zwischen 0.1 mol/l und gesättigt, vorzugsweise von etwa 3 mol/l, als Aufbewahrungslösungfür eine kombinierte pH-Glaselektrode zu verwenden, verständlich ist es jedoch im Rahmen der Erfindung ebenfalls möglich, getrennte pH-Glaselektroden in einer Ammoniumsalz-Lösung, insbesondere mit einer Konzentration von 3 mol/l, zu lagern.

Die Erfindung betrifft des weiteren ein System, umfassend
- Eine insbesondere Kombinierte pH-Glaselektrode; sowie
- Eine Ammoniumchlorid-oder Ammoniumnitrat-Lösung (NH₄Cl-Lösung oder NH₄NO₃-Lösung) als Aufbewahrungs-Losung ; oder den/die Grundstoff(e) zur Herstellung einer solchen Aufbewahrungslösung, insbesondere fesles Ammoniumchlorid (NH₄Cl), Ammoniumnitrat

Die erfindungsgemässe Aufbewahrungslösung kann selbstverständlich gebrauchsfertig, aber auch beispielsweise als noch zu verdünnende Lösung etc. bereitgestellt werden. Selbstverständlich ist erfindungsgemäss auch lediglich das Bereitstellen der/des Grundstoff(e) möglich, bspw. also von festem Ammoniumchlorid (NH₄Cl)

Es ist im Rahmen der Erfindung besonders bevorzugt, die Konfiguration bestehender pH-Glaselektroden, insbesondere also auch den Bezugsektrolyten im Referenzsystem, nicht zu ändern. Dies wird insbesondere durch die vorstehend beschriebene, hervorragende Kompatibilität bspw. einer 3M Ammoniumchlorid-Lösung als Aufbewahrungslösung mit einer 3M Kaliumchlorid-Lösung als Bezugselektrolyt im Referenzsystem bewirkt.

Die Erfindung wird nachstehend anhand eines bevorzugten Ausführungsbeispiels erläutert, ohne dass der Gegenstand der Erfindung auf diese Ausführungsform zu beschränken wäre. Es zeigen:
- Figur 1:: pH-Glaselektrode, schematisches Funktionsprinzip;
- Figur 2:: Bezugselektrode, schematischer Aufbau;
- Figur 3:: kombinierte pH-Glaselektrode, schematisch;
- Figur 4 und 5:: Statische bzw. dynamische Ansprechzeiten einer pH-Glaselektrode, in Abhängigkeit von der Lagerung in drei verschiedenen Aufbewahrungs-Lösungen.

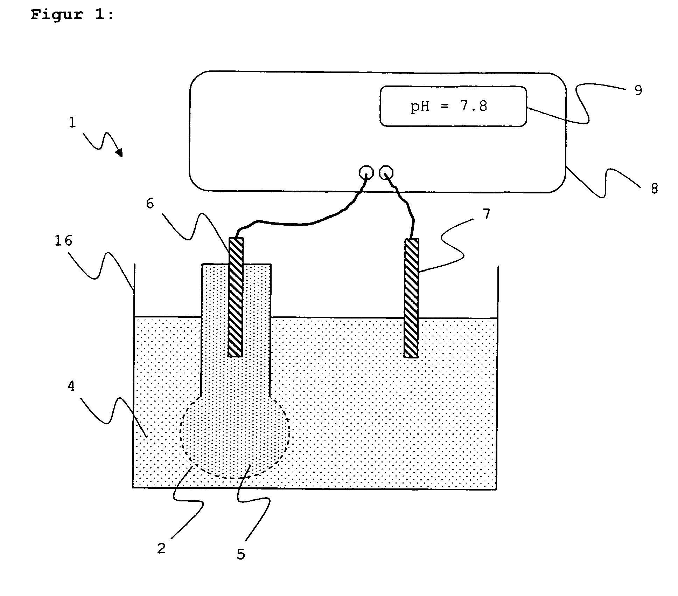

In Figur 1 ist schematisch das Funktionsprinzip einer pH-Glaselektrode 1 illustriert. Eine solche pH-Glaselektrode verfügt über eine innere Bezugselektrode 6 und eine äussere Bezugselektrode 7. Die äussere Bezugselektrode 7 ist in direktem Kontakt mit einer Analysen-Lösung 4, welche sich in einem Gefäss 16 befindet. Die innere Bezugselektrode 6 ist in Kontakt mit einem Puffer 5 mit bekanntem pH. Über eine Quellschicht 2 in der pH-Glaselektrode 1 und den Puffer 5 mit bekanntem pH steht die innere Bezugselektrode 6 in Kontakt mit der Analysen-Lösung 4. An der inneren und äusseren Grenzfläche der Quellschicht 2 bildet sich eine Potentialdifferenz aus, welche proportional zum pH der Analysen-Lösung 4 ist und mit den Bezugselektroden 6 und 7 gemessen werden kann. Der Messwert wird zumeist direkt auf einer Anzeige 9 eines pH-Messgeräts 8 als pH-Wert der Analysen-Lösung 4 ausgegeben. In Figur 1 ist eine Ausführungsform einer pH-Glaselektrode 1 mit physisch vom Rest der Elektrode getrennter, äusserer Bezugselektrode 7 gezeigt. Selbstverständlich ist auch ein kombinierter Aufbau einer pH-Glaselektrode 1 möglich, bei welchem die äussere Bezugselektrode 7 mit dem Rest der pH-Glaselektrode 1 verbunden oder verbindbar ist.

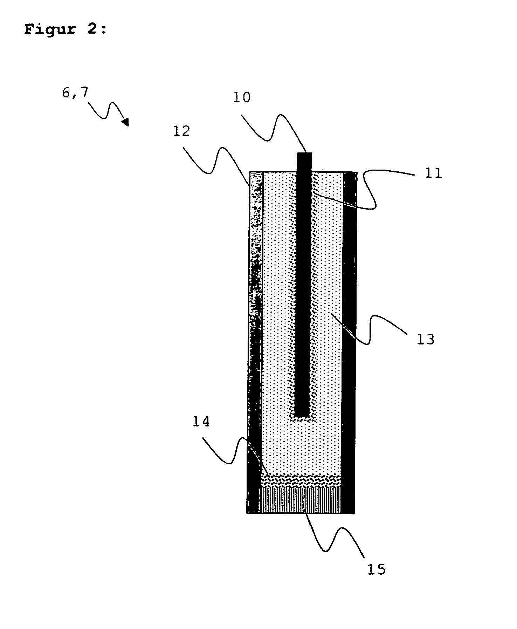

Figur 2 illustriert schematisch den Aufbau einer inneren bzw. äusseren Bezugselektrode 6,7, welche gleichartig aufgebaut sein können, anhand einer Ag/AgCl-Elektrode. Ein Silberdraht 10 ist mit einer Schicht Silberchlorid 11 überzogen. Dieser Silberdraht 10 ist von einer Glaswandung 12 umschlossen, welche mit einem Referenzelektrolyten 13, zumeist 3M Kaliumchlorid (KCl), gefüllt ist. Über ein Diaphragma (Keramikstift, Platinzwirn, Schliff, Loch usw.) 15 steht die Bezugselektrode 6,7 mit einer Analysen-Lösung 4 oder einer Aufbewahrungslösung 3 in Verbindung.

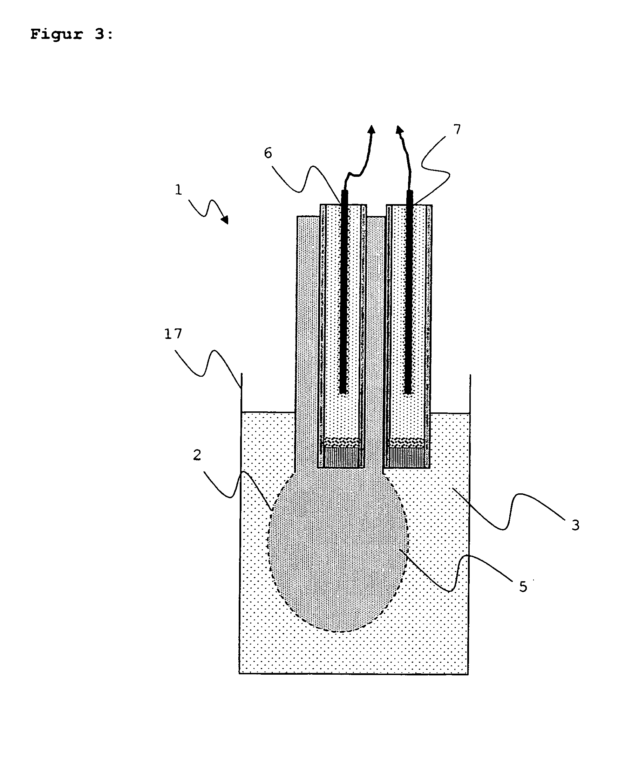

Figur 3 illustriert schematisch eine kombinierte pH-Glaselektrode 1, mit innerer Bezugselektrode 6 und äusserer Bezugselektrode 7. Die Silberdrähte beider Bezugselektroden 6,7 sind mit einem (hier nicht gezeigten) pH-Messgerät 8 verbindbar. Die Quellschicht 2 der pH-Glaselektrode 1 muss ständig feucht gehalten werden, damit die Quellschicht 2 intakt gehalten wird. Hierzu wird zumindest die Quellschicht 2 der pH-Glaselektrode 1 in einer Aufbewahrungslösung 3 gelagert, welche sich in einem Aufbewahrungsbehälter 17 befindet; zumeist handelt es sich bei dem Aufbewahrungsbehälter 17 um eine aufsteckbare Kappe oder dergleichen. Zumeist wird als Aufbewahrungslösung 3 derzeit eine 3M Kaliumchlorid-Lösung verwendet, da diese keine Potentialverschiebung mit dem Referenzelektrolyten (zumeist ebenfalls KCl) verursacht, falls bei der Lagerung der pH-Glaselektrode 1 Aufbewahrungs-Lösung 3 in das Referenzsystem der äusseren Bezugselektrode 7 eindringt. Zudem weist KCl nur ein sehr geringes Diffusionspotential am Diaphragma 15 auf und ist zudem sehr kostengünstig.
Nachteilig bei der Verwendung von KCl als Aufbewahrungs-Lösung 3 ist die recht langen Ansprechzeiten der pH-Glaselektrode 1 insnach längerer Lagerung.

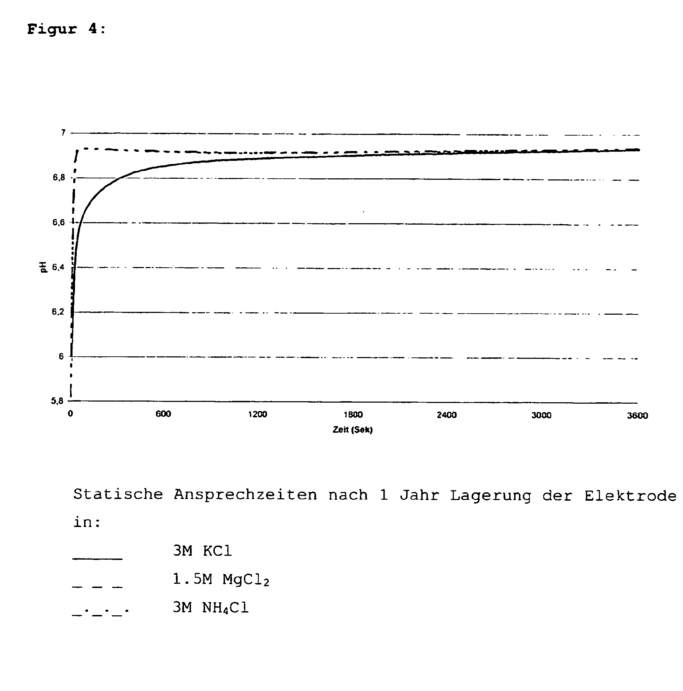

Figur 4 illustriert die Ansprechzeiten einer pH-Glaselektrode 1 einer niederleitenden Lösung nach dem Lagern in verschiedenen Aufbewahrungslösungen 3 für jeweils 1 Jahr. Als pH-Glas wurden verschiedene Lithium-Silikat Gläser verwendet, von denen hier eines exemplarisch ausgewählt ist. Die Erfindung ist nicht auf ein Zusammenwirken mit speziellen pH-Gläsern zu beschränken. Als niederleitende Lösung wurde eine mit CO₂ gesättigte, 0.05 mM Natriumhydrogencarbonat-Lösung verwendet. Gemäss EN-ISO-10523 besitzt eine solche Lösung einen pH-Wert von 7.00 bei 25°C. Diese Lösung wurde für statische Ansprechzeitsmessungen verwendet, mittels Eintauchen der Elektrode in die Lösung durchgeführt wurden. Aus Figur 4 ist ersichtlich, dass mit einer 3M Kaliumchlorid-Aufbewahrungslösung (durchgezogene Linie) eine wesentlich sowohl gegenüber einer 1.5M Magnesiumchlorid-Aufbewahrungslösung (gestrichelte Linie ;nicht erfindungsgemäss) als auch einer 3M Ammoniumchlorid-Aufbewahrungslosung (strichpunktierte Linie ;erfindungsgene verzö-) gerte Einstellung des pH von ca. 7 erfolgt.

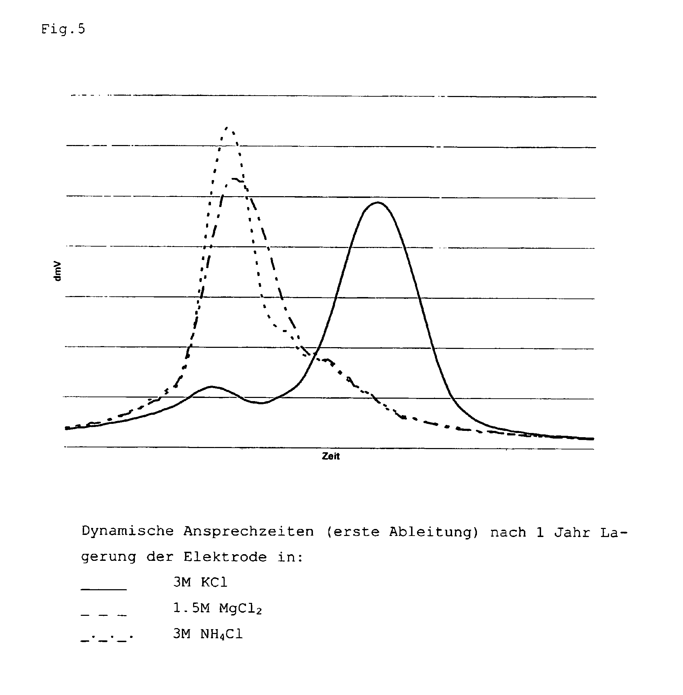

Zusätzlich wurde eine 0.14 mM NaOH Lösung als Vorlage-Lösung verwendet, um die Ansprechzeit während einer Titration (dynamisch) zu untersuchen (Figur 5). Diese wurde vorgelegt und bei Konstanter Dosiergeschwindigkeit mit einer Säure, hier 0.1 mol/L Salzsäure, mittels einer computergesteuerten mechanischen Präzisionsbürette titriert. Eine ideale Ansprechzeit, dargestellt durch die erste Ableitung der Titrationskurve, zeigt einen grossen Peak, welchem ein zweiter, kleinerer Peak folgt. Ein kleiner Peak hingegen, welchem ein grosser Peak folgt, illustriert eine sehr schlechte Ansprechzeit. Während eine Lagerung der Elektrode während eines Jahres in 3M KCl (durchgezogene Linie) zu einer sehr schlechten Ansprechzeit führt (kleiner Peak, dem ein grosser Peak folgt), werden sowohl mit 3M NH₄Cl (strichpunktierte Linie ;erfingungegemäss) als auch mit 1.5M MgCl₂ (gestrichelte Linie : nicht erfingungegemäss) wesentlich verbesserte Ansprechzeiten erzielt. Dies unterstreicht die hervor=agende Eignung von NH₄Cl und MgCl₂ als Aufbewahrungslösungen für pH-Glaselektroden.

Da bei der Lagerung einer pH-Glaselektrode die Aufbewahrungslösung in das Referenzsystem der äusseren Bezugselektrode (zumeist 3M KCl) eindringen kann, wurde untersucht, ob dies zu einer Potentialverschiebung führt. Hierzu wurden verschieden Mischungen als Referenzelektrolyt in die äussere Bezugselektrode gegeben. Die Ergebnisse sind in Tabelle 1 wiedergegeben:

**Tabelle 1:**

| | S 4-7-9 (%) | S 4-7 (%) | S 7-9 (%) | Nullpunkt (mV) |
|---|---|---|---|---|
| HCl* | 99.10 | 99.27 | 98.80 | -1.00 |
| NH₄Cl* | 99.82 | 99.67 | 100.08 | -1.90 |
| MgCl₂ : KCl 1:4* | 99.60 | 98.54 | 101.42 | -6.20 |
| MgCl₂ : KCl 1:1* | 99.94 | 97.54 | 104.06 | -15.80 |
| MgCl₂* | 99.97 | 96.03 | 106.74 | -25.10 |

Alle Referenzelektrolyte weisen eine Chloridionenkonzentration von 3 mol/l auf. Der Nullpunkt ist angegeben als Millivolt-Wert der Elektrode bei exakt pH 7.00.
- S 4-7-9:: Steigung der Kalibrationsgeraden, berechnet aus Messengen der Kalibrations-Puffer pH 4, pH 7 und pH 9;
- S 4-7:: Steigung der Kalibrationsgeraden, berechnet aus Messungen der Kalibrations-Puffer pH 4 und pH 7.
- S 7-9:: Steigung der Kalibrationsgeraden, berechnet aus Messungen der Kalibrations-Puffer pH 7 und pH 9.

Aus vorstehender Tabelle 1 ist ersichtlich, dass selbst mit einer reinen, 3M NH₄Cl-Lösung als Referenzelektrolyt hervorragende, mit 3M KC1 vergleichbare Kalibrationsgeraden und Nullpunktswerte erzielt werden. Bei Verwendung von steigenden Anteilen MgCl₂ hingegen kommt es zu einer Potentialverschiebung: Die Steigungen der Kalibrationsgraden sind insbesondere bei 2-Punkt-Kalibrierungen ungenügend, und der Nullpunkt ist erheblich verschoben. Daher ist eine MgCl₂-Aufbewahrungslösung hauptsächlich für getrennte pH-Glaselektroden zu verwenden. Die NH₄Cl-Aufbewahrungslösung ist hingegen sowohl für kombinierte als auch getrennte pH-Glaselektroden gleichermassen geeignet.

## Patentansprüche

1. Verfahren zur Aufbewahrung einer insbesondere kambisierten pH-Glaselektrode (1), **dadurch gekennzeichnet, dass** wenigstens die Quellschisht (2) der pH-Glaselektrode (1) in einer Ammoniumnitrat-oder Ammoniumchlorid (3) gelagert wird, welche Alkalimetallionen in eines konzentration kleiner als 0.5 mol/L enthält, insbesondere alkalimetallionen-frei ist.

2. Verfahren zur Aufbewahrung einer pH-Glaselektrode (1) gemäss Anspruch 1, **dadurch gekennzeichnet, dass** die Konzentration der Ammoniumchlorid- oder Ammoniumnitrat-Lösung, c(NH₄Cl) oder c(NH₄NO₃), zwischen 0.1 mol/l und gesättigt, vorzugweise bei etwa 3 mol/l

3. Verwendung einer Ammoniumnitrat- oder Ammoniumchlorid-Lösung als Aufbewahrungs-Lösung (3) für eine pH-Glaselektrode (1) , wobei die Anβewabrunglösung Alkalimetallionen in einer Konzentration kleiner als 0.5 mol/l vendhält, insbesondere alkalsaetallioses-frei ist.

4. Verwendung einer AufbewahrungsLösung gemäss Anspruch 3, wobei die Aufbewahrungslösung (3) für eine kombinierte pH-Glaselektrode (1) verwendet wird.

5. Verwendung gemäss Anspruch 4, **dadurch gekennzeichnet, dass** die Konzentration der Ammoniumchlorid- oder Ammoniumnitrat-Lösung, c(NH₄Cl) oder c(NH₄NO₃), zwischen 0.1 mol/l und gesättigt, vorzugsweise bei etwa 3 mol/l liegt.

6. System, umfassend
• Eine insbesondere kombinierte pH-Glaselektrode (1); sowie
• eine Ammoniumchlorid- oder Ammoniumnitrat-Lösung (NH₄Cl-Lösung oder NH₄NO₃-Lösung) ; als Aufbewahrungslösung (3), welche ; Alkalimettalionen in einer konzentration kleiner als 0.5 mol/l enthält, insbesondere alkalimetallionen-frei ist,
**dadurch gekennzeichnet, dass** wenigstens die Quellschicht (2) der pH-Glaselektrode (1) in der Aufbewahrungs-Lösung (3) gelagert ist.

7. System gemäss Anspruch 6, wobei die pH-Glaselektrode
• eine kombinierte pH-Glaselektrode (1) mit einer vorzugsweise 3M Kaliumchlorid-Lösung (KCl-Lösung) im Referenzsystem ist.

## Claims

1. Process for storage of a, preferably combined, pH glass electrode (1), **characterized in that** at least the swelling layer (2) of the pH glass electrode (1) is stored in an ammonium nitrate or ammonium chloride solution (3) which contains alkali metal ions in a concentration of less than 0.5 mol/l, preferably free of alkali metal ions.

2. Process for storage of a pH glass electrode (1) according to Claim 1, **characterized in that** the concentration of the ammonium chloride or ammonium nitrate solution, c (NH₄Cl) or c(NH₄NO₃), is between 0.1 mol/l and saturated, preferably of about 3 mol/l.

3. Use of an ammonium nitrate or ammonium chloride solution as storage solution (3) for a pH glass electrode (1), wherein the storage solution contains alkali metal ions in a concentration of less than 0.5 mol/l and is, preferably alkali metal ion free.

4. Use of a storage solution according to Claim 3, wherein the storage solution (3) is used for a combined pH glass electrode (1).

5. Use according to Claim 4, **characterized in that** the concentration of the ammonium chloride or ammonium nitrate solution, c(NH₄Cl) or c(NH₄NO₃), is between 0.1 mol/l and saturated, preferably of about 3 mol/l.

6. System comprising
• a preferably combined pH glass electrode (1) and
• an ammonium chloride or ammonium nitrate solution (NH₄Cl solution or NH₄NO₃ solution) as storage solution (3) which contains alkali metal ions in a concentration of less than 0.5 mol/l and is, preferably alkali metal ion free, **characterized in that** at least the swelling layer (2) of the pH glass electrode (1) is stored in the storage solution (3).

7. System according to Claim 6, wherein the pH glass electrode
• is a combined pH glass electrode (1) with a preferably 3M potassium chloride solution (KCl solution) in the reference system.

## Revendications

1. Procédé de conservation d'une électrode de pH (1) en verre, en particulier une électrode combinée, **caractérisée en ce qu'**au moins la strate de gonflement (2) de l'électrode de pH (1) en verre est conservée dans une solution (3) de nitrate d'ammonium ou de chlorure d'ammonium qui contient des ions de métal alcalin à une concentration inférieure à 0,5 mole/l et qui en particulier est exempte d'ions de métal alcalin.

2. Procédé de conservation d'une électrode de pH (1) en verre selon la revendication 1, **caractérisée en ce que** la concentration de la solution de chlorure d'ammonium ou de nitrate d'ammonium, c(NH₄Cl) ou c(NH4₄O₃), est comprise entre 0,1 mole/l et la saturation et est de préférence d'environ 3 moles/l.

3. Utilisation d'une solution de nitrate d'ammonium ou de chlorure d'ammonium comme solution de conservation (3) d'une électrode de pH (1) en verre, quoique la solution de conservation contient des ions de métal alcalin à une concentration inférieure à 0,5 mole/l et étant en particulier exempte d'ions de métal alcalin.

4. Utilisation d'une solution de conservation selon la revendication 3, quoique la solution de conservation (3) va être utilisée pour une électrode combinée de pH (1) en verre.

5. Utilisation selon la revendication 4, **caractérisée en ce que** la concentration de la solution de chlorure d'ammonium ou de nitrate d'ammonium, c(NH₄Cl) ou c(NH₄NO₃) , est comprise entre 0,1 mole/l et la saturation et est de préférence d'environ 3 mole/l.

6. Système qui comprend :
une électrode de pH (1) en verre, en particulier une électrode combinée, ainsi que
une solution de chlorure d'ammonium ou de nitrate d'ammonium (solution de NH₄Cl ou solution de NH₄NO₃) comme solution de conservation (3) qui contient des ions de métal alcalin à une concentration inférieure à 0,5 mole/l et qui est en particulier exempte d'ions de métal alcalin,
**caractérisé en ce que**
au moins la strate de gonflement (2) de l'électrode de pH en verre (1) est conservée dans la solution de conservation (3).

7. Système selon la revendication 6, quoique l'électrode de pH en verre est une électrode combinée de pH en verre (1) qui présente une solution de préférence de 3M de chlorure de potassium (solution de KCl) dans le système de référence.
